# FASCICULE DE BREVET EUROPEEN

(11) **EP 1 967 418 B1**
(45) Date de publication et mention de la délivrance du brevet: **02.09.2009**
(21) Numéro de dépôt: 08004243.5
(22) Date de dépôt: 07.03.2008
(51) Int. Cl.: B60R 21/04, B60R 13/08

(54) **Structure pour le capitionnage interne d'un véhicule automobile et éléments le constituant**
Struktur für die Innenpolsterung eines Kraftfahrzeugs und diese umfassende Elemente
Structure for internal padding of an automobile and the elements that form it

(30) Priorité: 09.03.2007 FR 0701744
(43) Date de publication de la demande: 10.09.2008
(73) Titulaire: Balma, Raphaël, 74230 Thônes (FR); Balma, Fanny, 74230 Thônes (FR)
(72) Inventeur: Balma, Raphaël, 74230 Thônes (FR); Balma, Fanny, 74230 Thônes (FR)
(74) Mandataire: Gasquet, Denis

(56) Documents cités:
- FR-A- 2 704 190
- FR-A- 2 744 978
- US-A- 5 483 028
- US-A1- 2006 071 507
- ANONYMOUS: "Inflatable roof bladder" RESEARCH DISCLOSURE, MASON PUBLICATIONS, HAMPSHIRE, GB, vol. 407, no. 53, mars 1998 (1998-03), XP007122449 ISSN: 0374-4353

## Description

La présente invention concerne une structure pour le capitonnage interne, notamment d'un véhicule automobile, du type comportant une zone utilitaire formée par un caisson dont les parois présentent des nervures de raidissement, alternant avec des parties creuses formant des profiles en creux.

A l'heure actuelle, le capitonnage des véhicules utilitaires s'effectue par l'intermédiaire de panneaux en bois aggloméré ou contreplaqué, , voir en matière plastique, découpés aux dimensions et formes des parois, pour être ensuite rapportés et fixés sur celles-ci, de manière à offrir des parois lisses plutôt que présentant des zones alternativement pleines et creuses de raidissement, nuisant à l'habilité et au confort de manutention dans le volume utile concerné.

Néanmoins, plusieurs inconvénients sont inhérents au capitonnage par panneaux bois.

L'un d'eux réside dans la fixation des panneaux, du fait de l'absence de moyens d'accroche sur les parois à habiller.

Cela nécessite de poser préalablement des tasseaux perpendiculairement aux nervures, puis de fixer les panneaux sur ceux-ci.

On comprend bien qu'une telle préparation des surfaces à habiller est longue et, bien entendu, coûteuse.

De plus, l'épaisseur des tasseaux, à laquelle s'ajoute celle des panneaux, réduit le volume utile du véhicule.

D'autres inconvénients sont liés au capitonnage par panneaux bois.

En effet, les dimensions de ces derniers ne permettent pas leur palettisation, et conséquemment leur transport et manutention par l'intermédiaire de palettes, particulièrement quant il sagit de palettes de type européennes.

Ceci nécessite donc d'envisager un transport spécial, donc coûteux.

De plus, les panneaux bois, qu'ils soient agglomérés ou contreplaqués, font intervenir de la colle contenant des solvants, ayant pour conséquence des émanations de formol, nuisibles à l'environnement et au personnel concerné.

A citer également le problème rencontré avec la législation de certains pays qui n'autorisent pas une immobilisation supérieure à trois jours pour la transformation des véhicules utilitaires du type précités.

On comprend bien les difficultés qu'il y a à gérer un parc de véhicules à transformer selon le procédé cité ci-dessus, du fait de la longueur des opérations.

Enfin, un inconvénient également important réside dans le poids des panneaux, tant dans la manutention avant pose que dans leur mise en place dans le véhicule, ou encore dans l'augmentation du poids de celui-ci, d'où sa consommation de carburant.

La présente invention a pour but de remédier à la totalité de ces inconvénients et concerne à cet effet une structure pour le capitonnage interne, notamment d'un véhicule automobile, du type comportant une zone utilitaire formée par un caisson dont les parois présentent des nervures de raidissement, alternant avec des parties creuses formant des profiles en creux, caractérisée en ce que ladite structure est constituée par des éléments individuels de remplissage des profiles en creux, de forme et de dimensions sensiblement complémentaires pour permettre leur encastrement et leur retenue par tout moyen, de manière à reconstituer une paroi à la fois lisse et capitonnée, pour constituer une protection contre les chocs.

Le document US-A-2006/0071507 montre une telle structure pour un capitonnage interne d'un véhicule.

L'invention concerne également les caractéristiques qui ressortiront au cours de la description qui va suivre, et qui devront être considérées isolément ou selon toutes leurs combinaisons techniques possibles.

Cette description donnée à titre d'exemple non limitatif, fera mieux comprendre comment l'invention peut être réalisée en référence aux dessins annexés sur lesquels:
La figure 1 représente, vu de l'arrière, un véhicule utilitaire en coupe transversale revêtu d'éléments de capitonnage interne selon l'invention, dont un en cours de montage.
La figure 2 est une vue en perspective à plus grande échelle d'une portion d'élément de capitonnage selon l'invention.

Selon un exemple d'application non limitatif, la figure (1) représente un véhicule utilitaire (1) formé d'une carrosserie (2) délimitant un caisson interne (3), nécessitant un renforcement de ses parois.

Généralement, cela est obtenu par des nervures de raidissement (4), alternant avec des parties creuses formant des profiles en creux (5), plus ou moins larges et plus ou moins nombreuses, selon le gabarit du véhicule.

Ce renforcement aurait pu se limiter à deux nervures supérieure (4a) et inférieure (4b), aux deux angles supérieurs et aux deux angles inférieurs, mais l'invention a été illustrée avec un véhicule (1) dont les parois comportent des nervures de raidissement (4) supplémentaires.

Quoi qu'il en soit, le problème posé consiste à capitonner le véhicule, tout en évitant les inconvénients connus de l'art antérieur déjà évoqués ci-dessus.

Selon l'invention, le capitonnage est réalisé à partir d'éléments de capitonnage individuels (6) de remplissage des profiles en creux (5), de forme et de dimensions sensiblement complémentaires pour permettre leur encastrement et leur retenue par tout moyen, de manière à reconstituer une paroi (2) à la fois lisse et capitonnée, pour constituer une protection contre les chocs.

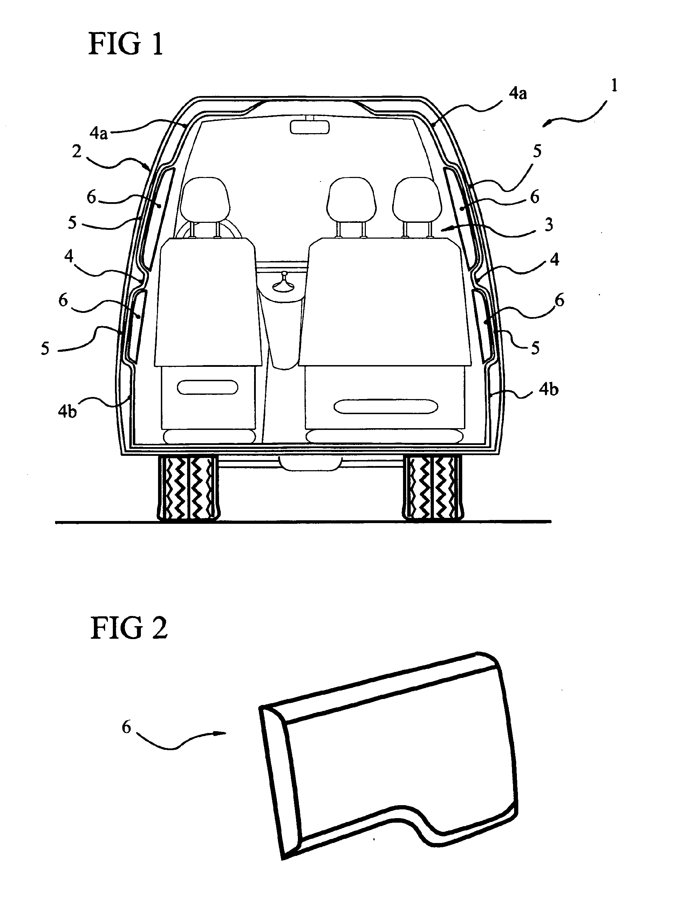

Selon l'exemple illustré aux figures 1 et 2, les éléments de capitonnage individuels (6) sont des éléments creux formés par des enveloppes aptes à remplir les profiles en creux (5).

Selon une autre forme de réalisation, les éléments de capitonnage (6) sont des éléments creux formés par des enveloppes réalisées par thermoformage d'une matière plastique, et aptes à remplir les profiles en creux (5).

Selon une autre forme de réalisation, les éléments de capitonnage (6) sont des éléments creux formés par des enveloppes réalisées par thermosoufflage d'une matière plastique, et aptes à remplir les profiles en creux (5).

Selon une variante non représentée, les éléments de capitonnage (6) sont des éléments pleins formés par des blocs d'un matériau léger, tel que le polystyrène, aptes à remplir les profiles en creux (5).

Préférentiellement, la fixation des éléments de capitonnage (6) dans les profiles en creux (5), entre chaque nervure de la paroi (2), s'effectue par collage, avec une colle contact par exemple.

Selon une autre possibilité, la fixation des éléments de capitonnage (6) dans les profiles en creux (5), entre chaque nervure de la paroi (2), s'effectue par l'intermédiaire d'éléments magnétiques intégrés, les parois (2) nervurées (4) du véhicule (1) à capitonner étant métallique.

Selon encore une autre possibilité, demeurant dans le concept inventif, les éléments de capitonnage sont des coussins gonflables avec une valve, aptes à remplir et à être fixés dans les profiles en creux (5).

Il va de soit aussi que les éléments individuel de capitonnage (6) peuvent être rempli d'une mousse synthétique.

Il va de soit aussi que l'on ne sortirait pas du cadre de l'invention, si l'enceinte de l'éléemnt de capitonnage comprenait une ou plusieurs parois interne de raidissement, voir un ou plusisur blocs de mousse synthétique.

## Revendications

1. Structure pour le capitonnage interne, notamment d'un véhicule automobile (1), du type comportant une zone utilitaire formée par un caisson (3) dont les parois présentent des nervures de raidissement (4), alternant avec des parties creuses en forme de profiles en creux (5), ladite structure est constituée par des éléments individuels (6) de remplissage des profiles en creux (5), de forme et de dimensions sensiblement complémentaires pour permettre leur encastrement et leur retenue par tout moyen, de manière à reconstituer une paroi (2) à la fois lisse et capitonnée, pour constituer une protection contre les chocs **caractérisée en ce que** les éléments de capitonnage individuels (6) sont des éléments creux formés par des enveloppes aptes à remplir les profiles en creux (5).

2. Structure selon la revendication 1, **caractérisée en ce que** les éléments de capitonnage (6) sont des éléments creux formés par des enveloppes réalisées par thermoformage d'une matière plastique, et aptes à remplir les profiles en creux (5).

3. Structure selon la revendication 1, **caractérisée en ce que** les éléments de capitonnage (6) sont des éléments creux formés par des enveloppes réalisées par thermosoufflage d'une matière plastique, et aptes à remplir les profiles en creux (5).

4. Structure selon l'une des revendications 1 à 3, **caractérisée en ce que** la fixation des éléments de capitonnage (6) dans les profiles en creux (5), entre chaque nervure de la paroi (2), s'effectue par collage.

5. Structure selon l'une des revendications 1 à 3, **caractérisée en ce que** la fixation des éléments de capitonnage (6) dans les profiles en creux (5), entre chaque nervure de la paroi (2), s'effectue par l'intermédiaire d'éléments magnétiques intégrés, les parois (2) nervurées (4) du véhicule (1) à capitonner étant métallique.

6. Structure selon l'une des revendications 1, ou 4 **caractérisée en ce que** les éléments de capitonnage sont des coussins gonflables aptes à remplir et à être fixés dans les profiles en creux (5).

7. Véhicule automobile comportant une structure de capitonnage interne selon l'une des revendications 1 à 6.

## Claims

1. Structure for internal upholstery, in particular of a motor vehicle (1), of the type comprising a utilitarian area formed by panelling (3), the walls of which have strengthening ribs (4) which alternative with hollow parts in the form of hollow profiles (5), the said structure is constituted by individual elements (6) for filling the hollow profiles (5), with a form and dimensions which are substantially complementary, in order to allow them to be embedded and retained by any means, such as to reconstitute a wall (2) which is both smooth and upholstered, so as to form protection against impacts, **characterised in that** the individual upholstery elements (6) are hollow elements formed by envelopes which can fill the hollow profiles (5).

2. Structure according to claim 1, **characterised in that** the upholstery elements (6) are hollow elements formed by envelopes which are produced by thermoforming of a plastic material, and can fill the hollow profiles (5).

3. Structure according to claim 1, **characterised in that** the upholstery elements (6) are hollow elements formed by envelopes which are produced by hot blow moulding of a plastic material, and can fill the hollow profiles (5).

4. Structure according to one of claims 1 to 3, **characterised in that** the upholstery elements (6) are secured in the hollow profiles (5), between each rib of the wall (2), by means of gluing.

5. Structure according to one of claims 1 to 3, **characterised in that** the upholstery elements (6) are secured in the hollow profiles (5), between each rib of the wall (2), by means of integrated magnetic elements, the ribbed (4) walls (2) of the vehicle (1) to be upholstered being metal.

6. Structure according to one of claims 1 or 4, **characterised in that** the upholstery elements are inflatable cushions which can fill and be secured in the hollow profiles (5).

7. Motor vehicle comprising an internal upholstery structure according to one of claims 1 to 6.

## Patentansprüche

1. Aufbau der Innenpolsterung, insbesondere eines Kraftfahrzeuges (1), umfassend einen durch einen Innenraum (3) gebildeten Nutzbereich, dessen Wandungen Versteifungsrippen (4) aufweisen, welche mit Hohlteilen in Form von Hohlprofilen (5) abwechseln, wobei der Aufbau durch Einzelelemente (6) zum Ausfüllen der Hohlprofile (5) gebildet ist, deren Form und Abmessungen im Wesentlichen komplementär sind, so dass sie mit beliebigen Mitteln derart eingebaut und festgehalten werden können, dass eine sowohl glatte als auch gepolsterte Wandung (2) zum Schutz gegen Stöße gebildet wird, **dadurch gekennzeichnet, dass** die einzelnen Polsterelemente (6) Hohlelemente sind, die durch Hüllen gebildet sind, die in der Lage sind, die Hohlprofile (5) auszufüllen.

2. Aufbau nach Anspruch 1, **dadurch gekennzeichnet, dass** die Polsterelemente (6) Hohlelemente sind, die durch Hüllen gebildet sind, welche durch Thermoformung eines Kunststoffes hergestellt werden und in der Lage sind, die Hohlprofile (5) auszufüllen.

3. Aufbau nach Anspruch 1, **dadurch gekennzeichnet, dass** die Polsterelemente (6) Hohlelemente sind, die durch Hüllen gebildet sind, welche durch Heißblasen eines Kunststoffes hergestellt werden und in der Lage sind, die Hohlprofile (5) auszufüllen.

4. Aufbau nach einem der Ansprüche 1 bis 3, **dadurch gekennzeichnet, dass** die Befestigung der Polsterelemente (6) in den Hohlprofilen (5) zwischen den jeweiligen Rippen der Wandung (2) durch Kleben erfolgt.

5. Aufbau nach einem der Ansprüche 1 bis 3, **dadurch gekennzeichnet, dass** die Befestigung der Polsterelemente (6) in den Hohlprofilen (5) zwischen den jeweiligen Rippen der Wandung (2) über integrierte Magnetelemente erfolgt, wobei die gerippten (4) Wandungen (2) des zu verkleidenden Fahrzeugs (1) metallisch sind.

6. Aufbau nach einem der Ansprüche 1 oder 4, **dadurch gekennzeichnet, dass** die Polsterelemente füllbare aufblasbare Kissen sind, die in den Hohlprofilen (5) befestigbar sind.

7. Fahrzeug mit einem Aufbau einer Innenpolsterung nach einem der Ansprüche 1 bis 6.
